# EUROPEAN PATENT SPECIFICATION

(11) **EP 3 263 438 B1**
(45) Date of publication and mention of the grant of the patent: **06.05.2020**
(21) Application number: 16177456.7
(22) Date of filing: 01.07.2016
(51) Int. Cl.: B63B 1/34, B63H 5/125

(54) **SYSTEM AND METHOD FOR REDUCING DRAG OF VESSEL**
SYSTEM UND VERFAHREN ZUR REDUZIERUNG DES WIDERSTANDS EINER SCHIFFS
SYSTÈME ET PROCÉDÉ POUR RÉDUIRE LA TRAÎNÉE DE VAISSEAU

(43) Date of publication of application: 03.01.2018
(73) Proprietor: Foreship Oy, 00810 Helsinki (FI)
(72) Inventor: Niittymäki, Janne, 20540 Turku (FI); Aarnio, Markus, 00810 Helsinki (FI); Suutari, Kimmo, 21220 Raisio (FI)
(74) Representative: Suominen, Kaisa Liisa

(56) References cited:
- GB-A- 189 719 702
- US-A- 3 628 488
- US-A- 4 008 676
- US-A- 6 164 230
- US-A1- 2004 000 265

## Description

### TECHNICAL FIELD

The present disclosure relates generally to marine vessels; and more specifically, to a system and method for reducing drag of a marine vessel.

### BACKGROUND

A marine vessel (for example, a ship) moving through a water body such as a sea or a river, has a hull to support structure of the marine vessel. The hull of the vessel generally includes a portion above the water and a remaining portion submerged in water. For control of motion of the marine vessel, increasing stability of the vessel and improving manoeuvrability of the vessel, the hull of the vessel may include appendages. For example, the appendages include keel, bulbous bow, rudder, fin stabilizers, bow thrusters and so forth. The appendages may be installed in openings in the hull of the marine vessel. Such a vessel is for example shown in document US4008676.

Typically, marine vessels include a bulbous bow in a front part of the marine vessels and may also include bow thrusters in the hull. Bow thrusters may be installed in openings in the hull known as thruster tunnels. The openings for appendages, such as the bow thrusters, in the hull of the vessel add to parasitic drag when the vessel is in motion. The parasitic drag opposes motion of the vessel in water. The creation of parasitic drag increases resistance of the vessel. Consequently, energy (or fuel) consumption required for propulsion of the marine vessel increases. The bulbous bow creates overpressure at the bow of the vessel, and consequently creates a wave system at the bow of the vessel. The wave system may reduce the overall vessel resistance at a certain optimal speed. At other speeds of the vessel, the wave system at bulbous bow has been found to increase parasitic drag and resistance of the vessel. Therefore, the bulbous bow can be optimized for reduction of resistance of the vessel only at the certain optimal speed of the vessel.

Presently, there exist some solutions to reduce parasitic drag and resistance of the vessel. For example, a solution to reduce parasitic drag makes use of installation of grids, at thruster tunnel openings, which house the bow thruster. However, the installation of grids at thruster tunnel openings leads to reduction of transverse thrust. Another solution makes use of scallop fairings aft of appendages in the hull. However, the use of scallop fairings has been found to be minimally effective as a solution to reduce parasitic drag. Yet another solution to reduce drag is the use of mechanical covers or inflatable bags to close thruster tunnel openings and fin stabilizer recesses. However, due to moving parts and presence of a locking mechanism, the use of mechanical covers or inflatable bags is not a robust and reliable solution.

Therefore, in light of the foregoing discussion, there exists a need to overcome the aforementioned drawbacks associated with reduction of parasitic drag of marine vessels.

### SUMMARY

The present disclosure seeks to provide a vessel having a system for reducing drag of the vessel. The present disclosure further seeks to provide a method for reducing drag of a vessel. Indeed, the present disclosure seeks to provide a solution to the existing problem or drag, which solution is more efficient than the prior art solutions. It aims as providing a solution that overcomes at least partially the prior art's problems, provides a reliable and sturdy way of reducing drag of a vessel and that can be also retrofitted to an existing vessel.

In one aspect, an embodiment of the present disclosure provides a system for reducing drag of a vessel, the vessel comprising a hull having a portion below waterline, wherein the hull comprises at least one opening in the portion below waterline, and the system comprises at least one water outlet arranged at the at least one opening and means for feeding water to the at least one water outlet, wherein the at least one water outlet is arranged essentially at a junction between an outer surface of the hull of the vessel and the opening.

In another aspect, an embodiment of the present disclosure provides a vessel having the above-described system for reducing drag of the vessel.

In yet another aspect, an embodiment of the present disclosure provides a method for reducing drag of a vessel, the vessel comprising a hull having a portion below waterline, wherein the hull comprises at least one opening in the portion below waterline. In the method, the water is fed at at least one water outlet arranged at the at least one opening, and the at least one water outlet is arranged essentially at a junction between an outer surface of the hull of the vessel and the opening.

Embodiments of the present disclosure substantially eliminate or at least partially address the aforementioned problems in the prior art, and enable reduction of parasitic drag of marine vessels.

Additional aspects, advantages, features and objects of the present disclosure would be made apparent from the drawings and the detailed description of the illustrative embodiments construed in conjunction with the appended claims that follow.

It will be appreciated that features of the present disclosure are susceptible to being combined in various combinations without departing from the scope of the present disclosure as defined by the appended claims.

### BRIEF DESCRIPTION OF THE DRAWINGS

The summary above, as well as the following detailed description of illustrative embodiments, is better understood when read in conjunction with the appended drawings. For the purpose of illustrating the present disclosure, exemplary constructions of the disclosure are shown in the drawings. However, the present disclosure is not limited to specific methods and instrumentalities disclosed herein. Moreover, those in the art will understand that the drawings are not to scale. Wherever possible, like elements have been indicated by identical numbers.

Embodiments of the present disclosure will now be described, by way of example only, with reference to the following diagrams wherein:
FIG. 1 is a schematic illustration of a vessel, in accordance with an embodiment of the present disclosure;
FIG. 2 is an illustration of a top view of a conventional bow of a vessel, in accordance with an embodiment of the present disclosure;
FIGS. 3A-3B are top views of a front part of a vessel with exemplary systems for reducing drag, in accordance with various embodiments;
FIGS. 4A-4C are enlarged side views of an opening of the systems of FIGS. 3A-3B, in accordance with various embodiments; and
FIGS. 5A-5D are top views of exemplary arrangements of one or more water outlets at an opening, in accordance with various embodiments.

In the accompanying drawings, an underlined number is employed to represent an item over which the underlined number is positioned or an item to which the underlined number is adjacent. A non-underlined number relates to an item identified by a line linking the non-underlined number to the item. When a number is non-underlined and accompanied by an associated arrow, the non-underlined number is used to identify a general item at which the arrow is pointing.

### DETAILED DESCRIPTION OF EMBODIMENTS

The following detailed description illustrates embodiments of the present disclosure and ways in which they can be implemented. Although some modes of carrying out the present disclosure have been disclosed, those skilled in the art would recognize that other embodiments for carrying out or practicing the present disclosure are also possible.

In one aspect, an embodiment of the present disclosure provides a system for reducing drag of a vessel according to the enclosed independent claim.

In another aspect, an embodiment of the present disclosure provides a vessel having the above-mentioned system for reducing drag of the vessel.

In yet another aspect, an embodiment of the present disclosure provides a method for reducing drag of a vessel according to the enclosed independent claim.

The present disclosure provides a system for reducing drag of a vessel. Specifically, the system includes structural and functional modifications of the vessel, to reduce drag of the vessel, as explained herein later in greater detail.

The present disclosure thus provides a system and a method for reducing drag of the vessel. The system and method described in the present disclosure provides an efficient solution to reduce drag and vessel resistance. Specifically, a water shield created by the system described in the present disclosure overcomes the drawbacks of installation of grids by providing an efficient solution to ensure no reduction of transverse thrust. Additionally, the system described in the present disclosure does not need to include moving parts, at least not moving parts located on the outer surface of the hull, thereby providing robustness and reliability to the system. In addition, the system and method described in the present disclosure are easy to install and implement. In an example, the system and the method of the present disclosure may reduce vessel resistance by more than 3 %.

In an embodiment, the vessel is a marine vessel such as a cargo ship, a passenger ship, a liner and the like. The vessel may also comprise an engine or any other suitable propelling means adapted to generate power and propel the vessel through a sea or a river. The vessel also comprises the present system for reducing drag of the vessel.

Further, the vessel comprises a hull. Specifically, the hull of the vessel is the lowermost portion or the foundation of the vessel. The hull supports the remaining structure of the vessel such as deck, cabin, and so forth. The front part of the hull is known as bow and the rear part of the hull is known as stern. The hull of the vessel floats partially submerged in water and meets the water surface at a waterline.

In an embodiment, the vessel comprises a bulb-like projection in the bow of the hull known as a bulbous bow. The bulbous bow reduces drag of the vessel by modifying the flow of water around the hull of the vessel. The present system can also be used in vessels not equipped with a bulbous bow.

The hull of the vessel comprises at least one opening in the portion below waterline. The at least one opening in the portion below waterline may be in the bow or the stern of the hull of the vessel, or it could be located in the middle part of the hull, between the bow and the stern. In an embodiment, the at least one opening in the portion below waterline is a thruster tunnel or a fin stabilizer recess.

In an embodiment, the thruster tunnel may be built as an opening into the hull of the vessel. Specifically, the thruster tunnel is an open passage in the hull of vessel which houses thrusters or other propulsion devices.

In an embodiment, the thruster tunnel may be built into the bow of the vessel. In another embodiment, the thruster tunnel may be built into the stern of the vessel.

In an embodiment, the vessel may include a bow thruster installed into the thruster tunnel at the bow of the vessel. Specifically, the bow thruster is a propulsion device which creates thrust in a transverse direction, for maneuvering the vessel. A bow thruster may be a transverse thruster.

In an embodiment, the bow thruster forces water from port side of the vessel to the starboard side of the vessel, through the thruster tunnel, in order to move or turn the vessel to the port side. In another embodiment, the bow thruster forces water from the starboard side of the vessel to the port side of the vessel, through the thruster tunnel, in order to move or turn the vessel to starboard side of the vessel.

In an embodiment, the fin stabilizer recess may be built as an opening into the hull of the vessel. Specifically, fin stabilizer recesses are hollow spaces or cavities which house fin-shaped stabilizers. Further the fin-shaped stabilizers may be used to reduce tilting of the vessel along a longitudinal axis of the vessel due to pressure exerted by wind or waves.

The system further comprises at least one water outlet arranged at the at least one opening. Specifically, the at least one water outlet is a device through which water may escape.

In an embodiment, the at least one water outlet is a nozzle. In another embodiment, the at least one water outlet is a nozzle box. In yet another embodiment, the at least one water outlet is a feed point.

In an embodiment, the nozzle is a device such as a pipe or tube, which may be used to control flow of a fluid. Specifically the nozzle may be used for controlling the direction, velocity, and pressure of flow of water in the vessel. In an embodiment, nozzles (or water outlets) may have same or different apertures.

In an embodiment, the nozzle box is a device to control the flow of water. Specifically, the nozzle box includes a space for allowing flow of water and includes a set of holes for distributing water into the openings.

In an embodiment, the feed point is a hole or an orifice to allow the flow of a fluid. Specifically, the feed point may be used for allowing the flow of water into the openings.

The at least one water outlet may be arranged essentially at a junction between an outer surface of the hull of the vessel and the opening.

The at least one water outlet may be arranged at chamfer of the at least one opening. Specifically, chamfer refers to a sloping surface at an edge or corner of the at least one opening. Indeed, in an embodiment, the at least one water outlet may be arranged to direct water towards outside of the hull at an angle of 5° - 45° with respect to the outer surface of the hull. Specifically, the at least one water outlet may be used to direct water towards outside of the hull at a suitable angle depending on a form factor of the hull.

In an embodiment, the system comprises a first water outlet and a second water outlet arranged at the at least one opening and means for feeding water to the second water outlet.

In another embodiment, the at least one water outlet may be arranged to direct water towards outside of the hull in a direction parallel to the hull.

In another embodiment, the at least one water outlet may be arranged to inject water into the chamfer of the opening.

In an embodiment, the water flow through the at least one opening may create a water shield. The water shield may also be known as a hydrodynamic shield. The term "water shield" used herein refers to the flow of water at the at least one opening or at the chamfer of the at least one opening. Specifically, the water shield is created at the at least one opening or the chamfer of the at least one opening using the at least one water outlet.

In an embodiment, the water shield may be implemented using the at least one water outlet. Further, the water shield may further reduce parasitic drag around and at the bow thruster. The term "parasitic drag" used herein refers to a force acting upon the vessel moving in water. Specifically, parasitic drag acts opposite to the relative motion of the vessel with respect to the water. Further, parasitic drag increases with increase in speed of the vessel since water strikes the vessel with greater force and moves across the hull of the vessel with a higher speed. Further, the water shield may be implemented by a homogenous water flow through the at least one opening or by a non-homogenous water flow through the at least one opening.

In an embodiment, the at least one water outlet may be arranged at at least one location to implement the non-homogenous water flow towards the inside of the at least one opening. Specifically, the non-homogenous water flow is created by spaced apart water outlets.

In another embodiment, the non-homogenous water flow through the at least one opening may be implemented using nozzles having different apertures. For example, two nozzles having different apertures produce unequal water flow from the nozzles to implement the non-homogenous water flow.

In an embodiment, the homogenous water flow through the at least one opening may be implemented using nozzles having same aperture. For example, two nozzles having the same aperture typically produce equal water flow from each nozzle to implement the homogenous water flow.

The system further comprises means for feeding water to the at least one water outlet. The means for feeding water comprise a water inlet arranged at the bow of the vessel. In an embodiment, the means for feeding water also includes a piping system for distribution of water.

The water inlet is an opening through which water enters into the vessel. Specifically, the water inlet is an opening in the bow of the vessel. For example, the water inlet may be an opening in the bulbous bow of the vessel.

In an embodiment, the water inlet may be arranged at the bulbous bow of the vessel. Further, a flow of water through the water inlet reduces overpressure at the bulbous bow of the vessel. The reduction of overpressure, consequently, reduces parasitic drag and vessel resistance. Moreover, in new vessels where the present system is built in during the manufacturing of the vessel, the water inlet can be combined with another water inlet of the vessel, for example a water inlet for the vessel cooling system.

In an embodiment, the water inlet may be covered by a grating. In an embodiment, the grating may also include a plurality of clamps to enable mounting the grating on the hull of the vessel. Further, the grating may include a plurality of openings for allowing water to pass through the water inlet. Specifically, the grating is a grid-like structure which primarily acts as a strainer for removing any debris present in the water entering into the water inlet.

In an embodiment, the grating may be used to prevent entry of large objects into a chamber at the water inlet. The chamber may be used to allow the flow of water from the water inlet to the piping system.

In an embodiment, the water inlet may comprise means for closing the water inlet. Specifically, the means for closing the water inlet includes, but is not limited to a cover, a lid and a casing. In an embodiment, the means for closing the water inlet acts as a protective cover for the water inlet and the grating.

In an embodiment, the term "piping system" used herein relates to a network of at least one pipe (or conduit) and at least one plumbing fitting which enables and regulates the flow of water from the water inlet to the at least one water outlet. Specifically, the piping system leads water from the water inlet to the at least one water outlet arranged at the at least one opening in appropriate volumes per unit time to reduce the vessel resistance. In an embodiment, the at least one plumbing fitting includes, but is not limited to, a valve and a pump. For example, the means for feeding water to the at least one water outlet may comprise at least one pump and at least one valve.

In an embodiment, the at least one pump is a device that does mechanical work to move fluids. Specifically, the at least one pump is a device that does mechanical work to move water within the vessel.

In an embodiment, the at least one valve is a device that controls a flow of fluids. Specifically, the at least one valve is a device that controls the flow of water in the piping system of the vessel, by regulating amount of water flow, direction of water flow, and so forth. One or more valves may be arranged at any location in the piping system, as is deemed necessary for the particular system. For example, larger systems in larger ships may require more valves than smaller systems. Also, the amount of valves may depend on the location of the water inlet with respect to the water outlet, i.e. how far away they are one from another. Still further, some of the water outlets may be equipped with a valve upstream the water to be fed out said water outlet, while other water outlets may not be equipped with valves.

In an embodiment, the at least one plumbing fitting may be installed in the bow of the vessel.

In an embodiment, the at least one pipe may be closed by the valve at an optimal speed. At the optimal speed, a wave system created by overpressure at the bulbous bow reduces the overall vessel resistance. Therefore, the flow of water to the at least one opening is not required. Specifically, closing of the at least one pipe by the valve at the optimal speed restricts the flow of water to the at least one opening in the hull of the vessel.

In operation, water may enter into the vessel at the water inlet. After the inflow of water through the water inlet, water may be distributed using means for feeding water to the at least one water outlet, arranged at the at least one opening. Specifically, the water may be distributed using the piping network. The at least one water outlet, arranged at the at least one opening may be arranged to direct water towards outside of the hull. The at least one water outlet may also be arranged inside the at least one opening at a distance from the outer surface of the hull, to direct water at least partially to the inside of the at least one opening. The flow of water at the at least one opening or at chamfer of the at least one opening may create the water shield. The water shield reduces parasitic drag around and at the bow thruster. Consequently, resistance of the vessel may be reduced due to reduction of parasitic drag.

### DETAILED DESCRIPTION OF THE DRAWINGS

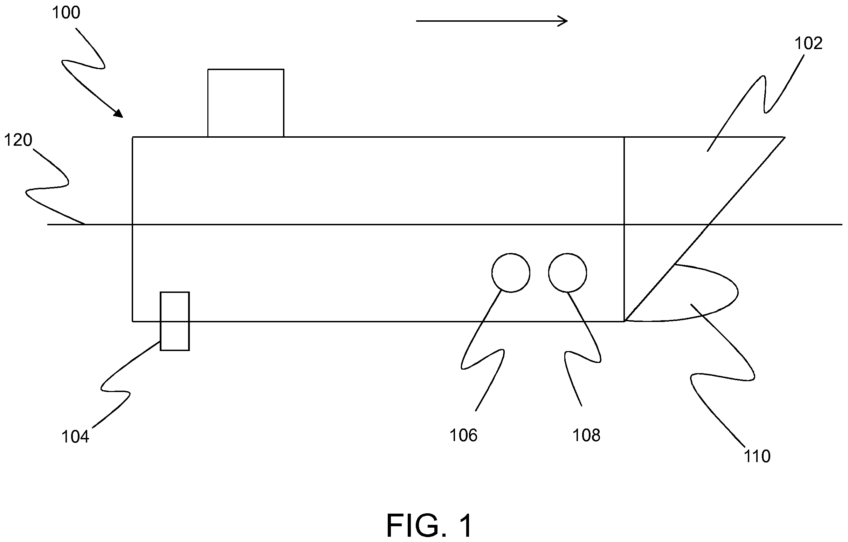

Referring to FIG. 1, illustrated is a schematic illustration of a vessel **100,** in accordance with an embodiment of the present disclosure. The vessel **100** is in water and has a portion below a waterline **120.** FIG. 1 indicates a forward direction, with an arrow, for movement of the vessel **100.** A hull of the vessel **100** has a front part **102** also known as a bow of the vessel **100.** As shown, the front part **102** of the hull of the vessel **100** includes a bulbous bow **110.** The vessel **100** also includes a propulsion system **104** to move the vessel **100** in a desired direction. The vessel **100** also includes openings **106** and **108** in hull of the vessel **100.** The openings **106** and **108** are openings for thruster tunnels and include bow thrusters (not shown) to manoeuver the vessel **100.**

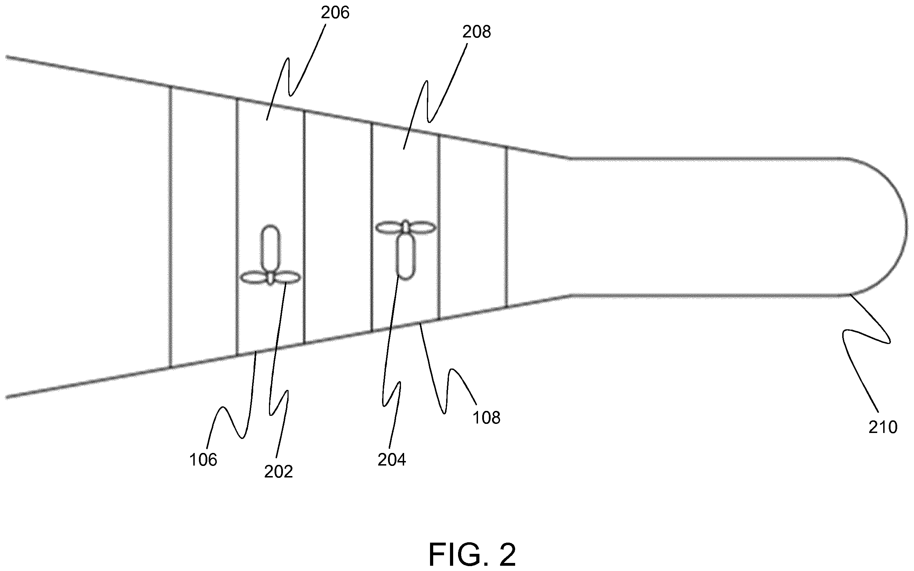

Referring to FIG. 2, illustrated is a top view of a conventional bow of a vessel with a bulbous bow (such as the vessel of FIG. 1), in accordance with an embodiment of the present disclosure. As shown, bow thrusters **202** and **204** are installed in thruster tunnels **206** and **208,** respectively. The thruster tunnels **206** and **208** include openings **106** and **108,** respectively. Further, the front part of the vessel **100** of FIG. 1 also includes a bulbous bow **210.**

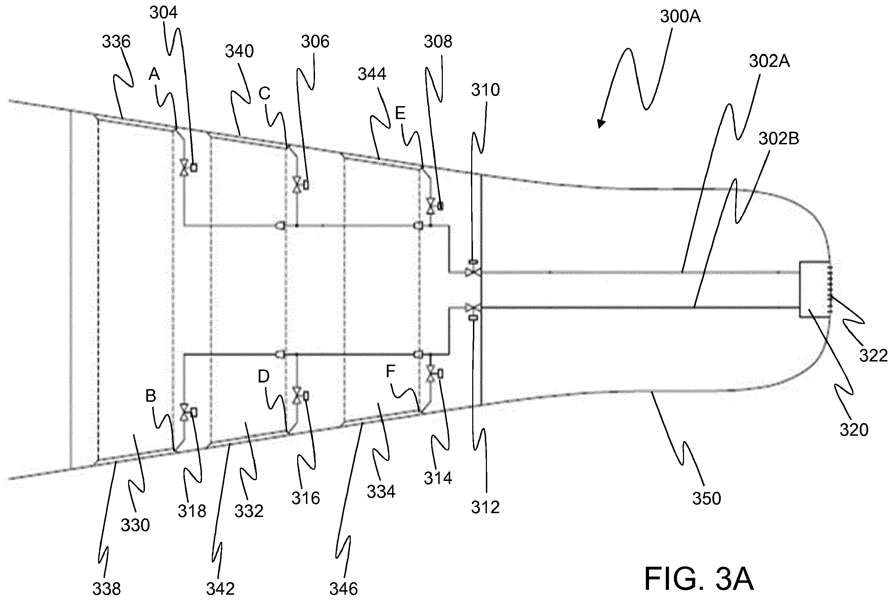

Referring to FIG. 3A, illustrated is a top view of a front part of a vessel (such as the vessel **100,** particularly, the bow of the vessel shown in FIG. 2) with an exemplary system **300A** implemented therein for reducing drag, in accordance with an embodiment of the present disclosure. The system **300A** includes means for feeding water, such as pipes **302A** and **302B.** The means for feeding water further includes valves **304,** 306, **308, 310,** 312, **314, 316,** and **318,** associated therewith. The water is fed into pipes **302A** and **302B** through a chamber **320** at the bulbous bow 350. The chamber **320** includes a water inlet covered by grating grid 322. The system **300A** includes thruster tunnels **330,** 332, and 334. Further, thruster tunnel **330** includes openings **336** and **338.** Similarly, the thruster tunnel **332** includes openings **340** and **342,** and the thruster tunnel **334** includes openings **344** and **346.** The system **300A** also includes water outlets arranged at openings **336, 338, 340, 342, 344** and 346 at positions **A, B, C, D, E,** and **F,** respectively. The water supply to water outlets arranged at openings **336, 338, 340,** 342, **344** and **346** are regulated by use of valves **304, 318, 306, 316, 308** and **314,** respectively.

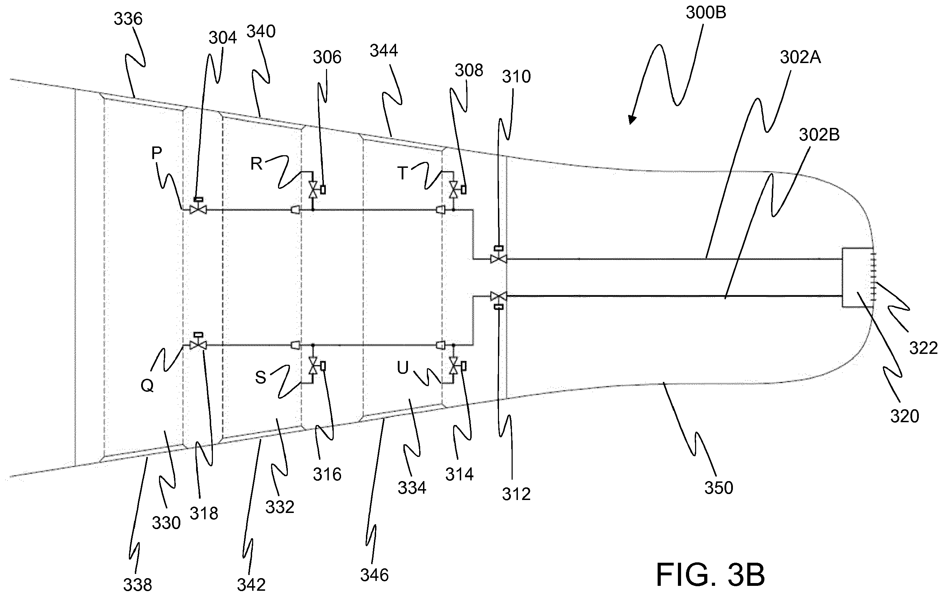

Referring to FIG.3B, illustrated is another top view of a front part of a vessel (such as the vessel **100,** particularly, the bow of the vessel shown in FIG. 2) with system **300B** for reducing drag, not in accordance with the present claims. The system **300B** includes means for feeding water such as pipes **302A** and **302B.** The means for feeding water further includes valves 304, **306, 308, 310, 312, 314, 316,** and **318.** The water is fed into pipes **302A** and **302B** through a chamber **320** at the bulbous bow **350.** The chamber 320 includes a water inlet covered by grating grid **322.** The system **300B** includes thruster tunnels 330, **332,** and **334.** Further, thruster tunnel **330** includes openings **336** and **338.** Similarly, the thruster tunnel **332** includes openings **340** and **342,** and the thruster tunnel 334 includes openings **344** and **346.** The system **300B** also includes water outlets arranged inside the openings **336, 338, 340, 342, 344** and **346** at a distance from an outer surface of the vessel at positions **P, Q, R, S, T,** and **U** respectively. The water supply to water outlets arranged at positions **P, Q, R, S, T,** and **U** are regulated by use of valves **304, 318, 306, 316, 308** and **314** respectively. As shown, the positions **P, Q, R, S, T,** and **U** of water outlets in FIG. 3B are different from the positions **A, B, C, D, E,** and **F** of water outlets in FIG. 3A.

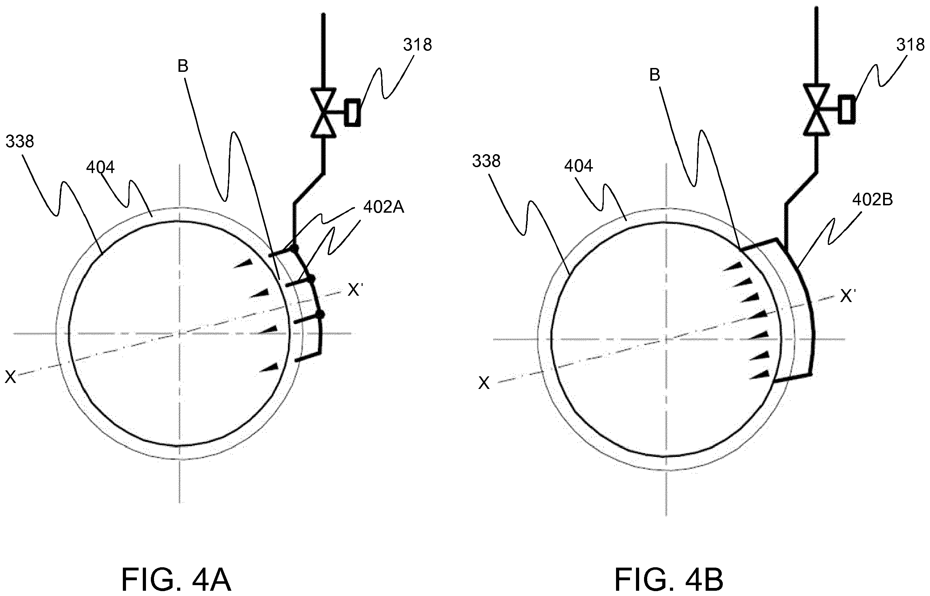

Referring to FIG. 4A, illustrated is an enlarged side view of an opening **338** of the system of FIG. 3A, in accordance with an embodiment of the present disclosure. As shown, the opening **338** at the position **B** and at a chamfer **404** is arranged with water outlets, such as plurality of nozzles 402A. The water supply to the plurality of nozzles (or water outlets) **402A** is regulated by the valve **318.** An axis denoted by **X-X'** indicates direction of water flow at the opening **338.**

Referring to FIG. 4B, illustrated is an enlarged side view of the opening **338** of the system of FIG. 3A, in accordance with another embodiment of the present disclosure. As shown, the opening **338** at the position **B** and at a chamfer **404** is arranged with a water outlet, such as a nozzle box **402B.** The water supply to the nozzle box (or water outlet) **402B** is regulated by the valve **318.** An axis denoted by **X-X'** indicates direction of water flow at the opening **338.**

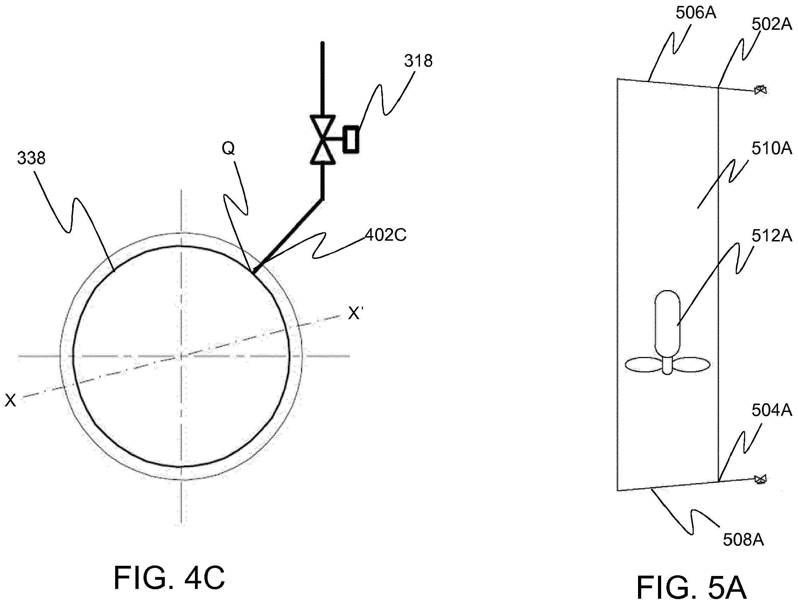

Referring to FIG. 4C, illustrated is an enlarged side view of the opening **338** of the system of FIG. 3B. As shown, an exemplary water outlet **402C** such as a feed point, is arranged inside the opening **338** at position **Q.** The position **Q** lies at a distance from an outer surface of a vessel, such as the vessel of FIG. 3B. The water supply to the feed point (or water outlet) **402C** is regulated by the valve **318.** An axis denoted by **X-X'** indicates direction of water flow at the opening **338.**

Referring to FIG. 5A, illustrated is a top view of an exemplary arrangement of one or more water outlets at an opening, in accordance with an embodiment of the present disclosure. The two water outlets **502A** and **504A** are arranged at openings **506A** and **508A,** respectively, of a thruster tunnel **510A.** The two water outlets **502A** and **504A** are nozzles. The thruster tunnel **510A** includes a thruster **512A.**

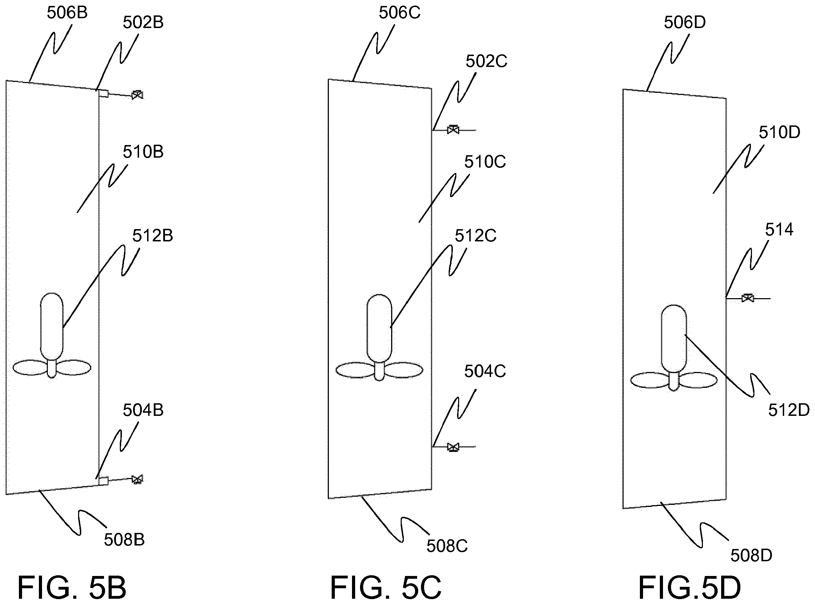

Referring to FIG. 5B, illustrated is a top view of an exemplary arrangement of one or more water outlets at an opening, in accordance with an embodiment of the present disclosure. The two water outlets **502B** and **504B** are arranged at openings **506B** and **508B** respectively, of a thruster tunnel **510B.** The two water outlets **502B** and **504B** are nozzle boxes. The thruster tunnel **510B** includes a thruster **512B.**

Referring to FIG. 5C, illustrated is a top view of an exemplary arrangement of one or more water outlets at an opening. The two water outlets **502C** and **504C** are arranged at a distance from openings **506C** and **508C** respectively, of a thruster tunnel **510C.** The two water outlets **502C** and **504C** are feed points. The thruster tunnel **510C** includes a thruster **512C.**

Referring to FIG. 5D, illustrated is a top view of an exemplary arrangement of one or more water outlets at an opening. A water outlet **514** is arranged at a position inside a thruster tunnel **510D.** The water outlet **514** is a feed point. The thruster tunnel **510D** includes openings **506D** and **508D,** and a thruster **512D.** As shown, the water outlet **514** is at a distance from the openings **506D** and **508D.**

Expressions such as "including", "comprising", "incorporating", "have", "is" used to describe and claim the present disclosure are intended to be construed in a non-exclusive manner, namely allowing for items, components or elements not explicitly described also to be present.

## Claims

1. A vessel (100) comprising a system (300A) for reducing drag of the vessel, the vessel comprising a hull having a portion below waterline (120), wherein the hull comprises at least one opening (106, 108, 336, 338) in the portion below waterline, the system comprising at least one water outlet (402A, 402B, 502A, 504A, 502B, 504B) arranged at the at least one opening and means for feeding water (302A, 302B) to the at least one water outlet, said means for feeding water comprising a water inlet arrangeable at a bow of the vessel, **characterised in that** the at least one water outlet is a nozzle arranged essentially at a junction between an outer surface of the hull of the vessel and the opening or at chamfer of the at least one opening.

2. A vessel (100) according to claim 1, wherein the at least one water outlet (402A, 402B, 502A, 504A, 502B, 504B) is arranged to direct water towards outside of the hull at an angle of 5° - 45° with respect to the outer surface of the hull.

3. A vessel (100) according to any of the preceding claims, wherein the water inlet comprises means for closing the water inlet.

4. A vessel (100) according to any of the preceding claims, wherein the means for feeding water (302A, 302B) comprises at least one pump and at least one valve.

5. A vessel (100) according to any of the preceding claims, wherein the at least one opening (106, 108, 336, 338) in the portion below waterline (120) is a thruster tunnel (330) or a fin stabilizer recess.

6. A vessel (100) according to any of the preceding claims, wherein the vessel comprises a first water outlet and a second water outlet arranged at the at least one opening (106, 108, 336, 338) and means for feeding water (302A, 302B) to the second water outlet.

7. A method for reducing drag of a vessel (100), the vessel comprising a hull having a portion below waterline (120), and the hull comprising at least one opening (106, 108, 336, 338) in the portion below waterline, wherein water is fed at at least one water outlet (402A, 402B, 502A, 504A, 502B, 504B) arranged at the at least one opening, said water originating from a water inlet arranged at a bow of the vessel, **characterised in that** the at least one water outlet is a nozzle arranged essentially at a junction between an outer surface of the hull of the vessel and the opening or at chamfer of the at least one opening.

## Patentansprüche

1. Schiff (100) umfassend ein System (300A) zur Reduzierung des Widerstands des Schiffs, wobei das Schiff einen Rumpf mit einem unterhalb der Wasserlinie (120) liegenden Abschnitt umfasst; wobei der Rumpf wenigstens eine Öffnung (106, 108, 336, 338) in dem unterhalb der Wasserlinie liegenden Abschnitt umfasst, wobei das System wenigstens einen Wasserauslass (402A, 402B, 502A, 504A, 502B, 504B), der an der wenigstens einen Öffnung angeordnet ist, und Mittel zur Zufuhr von Wasser (302A, 302B) an den wenigstens einen Wasserauslass umfasst, wobei das Mittel zur Zufuhr von Wasser einen Wassereinlass umfasst, der an einem Bug des Schiffes angeordnet werden kann, **dadurch gekennzeichnet, dass** der wenigstens eine Wasserauslass eine Düse ist, die im Wesentlichen an einer Verbindungsstelle zwischen einer Außenfläche des Rumpfes des Schiffes und der Öffnung oder einer Fase der wenigstens einen Öffnung angeordnet ist.

2. Schiff (100) nach Anspruch 1, wobei der wenigstens eine Wasserauslass (402A, 402B, 502A, 504A, 502B, 504B) so angeordnet ist, dass er Wasser in einem Winkel von 5° - 45° in Bezug auf die Außenfläche des Rumpfes zu einer Außenseite des Rumpfes leitet.

3. Schiff (100) nach einem der vorhergehenden Ansprüche, wobei der Wassereinlass Mittel zum Schließen des Wassereinlasses umfasst.

4. Schiff (100) nach einem der vorhergehenden Ansprüche, wobei das Mittel zur Zufuhr von Wasser (302A, 302B) wenigstens eine Pumpe und wenigstens ein Ventil umfasst.

5. Schiff (100) nach einem der vorhergehenden Ansprüche, wobei die wenigstens eine Öffnung (106, 108, 336, 338) in dem unterhalb der Wasserlinie liegenden Abschnitt ein Tunnel (330) für einen Ruderpropeller oder eine Aussparung für einen Flossenstabilisator ist.

6. Schiff (100) nach einem der vorhergehenden Ansprüche, wobei das Schiff einen an der wenigstens einen Öffnung (106, 108, 336, 338) angeordneten ersten Wasserauslass und zweiten Wasserauslass sowie Mittel zur Zufuhr von Wasser (302A, 302B) an den zweiten Wasserauslass umfasst.

7. Verfahren zur Reduzierung des Widerstands eines Schiffs (100), wobei das Schiff einen Rumpf mit einem unterhalb der Wasserlinie (120) liegenden Abschnitt umfasst, und der Rumpf wenigstens eine Öffnung (106, 108, 336, 338) in dem unterhalb der Wasserlinie liegenden Abschnitt umfasst, wobei Wasser an wenigstens einen an der wenigstens einen Öffnung angeordneten Wasserauslass (402A, 402B, 502A, 504A, 502B, 504B) zugeführt wird, wobei das Wasser von einem an einem Bug des Schiffes angeordneten Wassereinlass stammt, **dadurch gekennzeichnet, dass** der wenigstens eine Wasserauslass eine Düse ist, die im Wesentlichen an einer Verbindungsstelle zwischen einer Außenfläche des Rumpfes des Schiffes und der Öffnung oder einer Fase der wenigstens einen Öffnung angeordnet ist.

## Revendications

1. Navire (100) comprenant un système (300A) de réduction de la traînée du navire, le navire comprenant une coque présentant une partie située sous la ligne de flottaison (120), ladite coque comprenant au moins une ouverture (106, 108, 336, 338) dans la partie située sous la ligne de flottaison, le système comprenant au moins un orifice de sortie d'eau (402A, 402B, 502A, 504A, 502B, 504B) disposé au niveau de l'au moins une ouverture ainsi que des moyens d'apport en eau (302A, 302B) à l'au moins un orifice de sortie d'eau, lesdits moyens d'apport en eau comprenant un orifice d'entrée d'eau susceptible d'être disposé à l'étrave du navire, **caractérisé en ce que** l'au moins un orifice de sortie d'eau est une buse disposée essentiellement au niveau d'une jonction entre une surface extérieure de la coque du navire et l'ouverture ou au niveau d'un chanfrein de l'au moins une ouverture.

2. Navire (100) selon la revendication 1, dans lequel l'au moins un orifice de sortie d'eau (402A, 402B, 502A, 504A, 502B, 504B) est disposé pour diriger de l'eau vers l'extérieur de la coque selon un angle allant de 5° à 45° par rapport à la surface extérieure de la coque.

3. Navire (100) selon l'une quelconque des revendications précédentes, dans lequel l'orifice d'entrée d'eau comprend des moyens permettant de fermer l'orifice d'entrée d'eau.

4. Navire (100) selon l'une quelconque des revendications précédentes, dans lequel les moyens d'apport en eau (302A, 302B) comprennent au moins une pompe et au moins une vanne.

5. Navire (100) selon l'une quelconque des revendications précédentes, dans lequel l'au moins une ouverture (106, 108, 336, 338) présente dans la partie située sous la ligne de flottaison (120) est un tunnel de propulseur (330) ou une cavité pour aileron antiroulis.

6. Navire (100) selon l'une quelconque des revendications précédentes, dans lequel le navire comprend un premier orifice de sortie d'eau et un second orifice de sortie d'eau disposés au niveau de l'au moins une ouverture (106, 108, 336, 338) ainsi que des moyens d'apport en eau (302A, 302B) au second orifice de sortie d'eau.

7. Procédé de réduction de la traînée d'un navire (100), le navire comprenant une coque présentant une partie située sous la ligne de flottaison (120), et la coque comprenant au moins une ouverture (106, 108, 336, 338) dans la partie située sous la ligne de flottaison, de l'eau étant apportée à l'au moins un orifice de sortie d'eau (402A, 402B, 502A, 504A, 502B, 504B) disposé au niveau de l'au moins une ouverture, cette eau provenant d'un orifice d'entrée d'eau disposé au niveau de l'étrave du navire, **caractérisé en ce que** l'au moins un orifice de sortie d'eau est une buse disposée essentiellement au niveau d'une jonction entre une surface extérieure de la coque du navire et l'ouverture ou au niveau d'un chanfrein de l'au moins une ouverture.
